# EUROPÄISCHE PATENTSCHRIFT

(11) **EP 1 886 280 B1**
(45) Veröffentlichungstag und Bekanntmachung des Hinweises auf die Patenterteilung: **21.08.2013**
(21) Anmeldenummer: 06763185.3
(22) Anmeldetag: 18.05.2006
(51) Int. Cl.: G06T 11/20, G09G 5/42, G01P 1/08, G06T 9/00

(54) **VERFAHREN ZUR DARSTELLUNG EINES OBJEKTS MITTELS PARALLELER LINIEN**
METHOD FOR REPRESENTING AN OBJECT BY MEANS OF PARALLEL LINES
PROCEDE DE REPRESENTATION D'UN OBJET PAR DES LIGNES PARALLELES

(30) Priorität: 20.05.2005 DE 102005023356
(43) Veröffentlichungstag der Anmeldung: 13.02.2008
(73) Patentinhaber: ROBERT BOSCH GMBH, 70442 Stuttgart (DE)
(72) Erfinder: WEIGAND, Michael, 74363 Güglingen (DE); KUEHNEMANN, Joachim, 73760 Ostfildern (DE)
(86) Internationale Anmeldenummer: PCT/EP2006/062428
(87) Internationale Veröffentlichungsnummer: WO 2006/122969

(56) Entgegenhaltungen:
- EP-A- 0 837 427
- DE-A1- 10 303 278
- DE-A1- 19 859 430
- US-A- 4 660 028
- US-A- 5 442 741

## Beschreibung

### Stand der Technik

Die Erfindung geht aus von einem Verfahren zur Darstellung eines Objekts in einer Anzeige nach der Gattung des Hauptanspruchs. Es sind schon Anzeigen bekannt, die Bildpunkte aufweisen, wobei anzuzeigende Objekte auf die Bildpunkte der Anzeige abgebildet werden und die Bildpunkte zur Darstellung der Objekte entsprechend angesteuert werden. Ein Bild kann dabei durch die Werte für Farbe und Helligkeit für jeden einzelnen Bildpunkt beschrieben werden. Hiefür ist jedoch ein recht großer Speicheraufwand erforderlich. Daher sind Komprimierverfahren bekannt, in denen die Datenmenge reduziert werden kann. So können z.B. in einer Zeile angeordnete, benachbarte Bildpunkte, die eine gleiche Helligkeit und einen gleichen Farbwert aufweisen, durch diesen Helligkeits- und Farbwert sowie einen Wiederholfaktor beschrieben werden. Ferner sind auch andere Komprimierverfahren bekannt, bei denen die Farbtiefe für einen Betrachter möglichst unauffällig reduziert wird. Hierbei werden Bildpunkte, die benachbart angeordnet sind und die sich nur unmerklich in ihrer Farbe unterscheiden, als gleicher Farbwert beschrieben. Bei einer entsprechenden Bilddarstellung müssen die Bilddaten aus den komprimierten, gespeicherten Daten dekomprimiert werden. Aus der DE 198 59 430 A1 ist es bekannt, Bilddaten bereits teilweise vorzuberechnen und die vorberechneten Daten in einen Speicher abzulegen. Soll nun eine Bilddarstellung erfolgen, so werden diese vorberechneten Daten in einen Bildspeicher umkopiert, um sie zu einem Gesamtbild zusammenzusetzen.

Aus der US 4,660,028 ist ein Zeichengenerator bekannt, bei dem ein einzelner Buchstabe aus einer Trajektorie einzelner Vektoren zusammengesetzt wird. Die Vektoren werden dabei aneinandergehängt, um das Zeichen zu generieren. Für jeden Vektor wird eine Länge und eine Breite sowie eine Richtung angegeben.

Aus der EP 0 837 427 A1 ist ein Verfahren zur Lauflängencodierung eines Buchstabens bekannt, gemäß dem ein einzelner Buchstabe in codierter Form aus einzelnen horizontal verlaufenden Linien zusammengesetzt wird.

### Vorteile der Erfindung

Das erfindungsgemäße Verfahren zur Darstellung eines Objekts in einer Anzeige mit den Merkmalen des Hauptanspruchs hat demgegenüber den Vorteil, dass durch eine Darstellung eines Bildes, das aus einer Vielzahl gespeicherter Linien besteht, die parallel verlaufen, eine Objektdarstellung auf einfache Weise schnell erzeugt werden kann. Dabei ist eine Richtungsinformation vorgesehen, so dass die Linien für eine möglichst günstige Darstellung in der Anzeige in einer Vorzugsrichtung zur Vereinfachung der Darstellung ausgerichtet werden können. Die Liniendaten können schnell aus einem Speicher ausgelesen und von einer Recheneinheit leicht verarbeitet werden.

Erfindungsgemäß wird mit den Linien jeweils ein Farbverlauf und/oder einen Farbsättigungsverlauf von einem Anfangswert zu einem Endwert gespeichert. Anstelle einer Veränderung der Farbe für jeden einzelnen Bildpunkt ablegen zu müssen, kann durch eine vorzugsweise lineare Berechnung eines Farbwertes über die Länge der Linie auf einfache Weise eine Farbveränderung eines Objekts in einer Anzeige erzeugt werden.

Durch die in den Unteransprüchen aufgeführten Maßnahmen sind vorteilhafte Weiterbildungen und Verbesserungen des im Hauptanspruch angegebenen Verfahrens zur Darstellung eines Objekts möglich.

Ferner ist es vorteilhaft, die Linien mit Startpunkten und Endpunkten zu speichern. Damit kann einer Linie selbst eine eindeutige Position in einer Anzeige zugeordnet werden. Alternativ ist es auch möglich, die einzelnen Linien miteinander zu verketten, so dass der Anfangspunkt einer Linie entweder benachbart zu dem Anfangspunkt der vorhergehenden Linie liegt, an den Endpunkt der vorherigen Linie anschließt oder räumlich in Bezug auf den Endpunkt der vorliegenden Linie angegeben ist.

Weiterhin ist es vorteilhaft, Informationen zu den Eigenschaften der Linien codiert und damit bevorzugt auch komprimiert abzulegen. Hierdurch kann der für eine Darstellung benötigte Speicherplatz weiter verringert werden.

Weiterhin ist es vorteilhaft, bei der Übertragung der Linien auf eine Darstellung in einer Anzeige in Bezug auf die Bildpunktstruktur eine Mittelung durchzuführen. Hierdurch können Übergänge glatter gestaltet werden, so dass störende Kantenaufrauungen in einer Darstellung vermieden werden.

Weiterhin ist es vorteilhaft, die von dem dargestellten Objekt nicht belegten Bereiche der Anzeigefläche transparent zu schalten. Hierdurch kann das darzustellende Objekt mit anderen Objekten oder mit einem Hintergrundbild in der Anzeige überlagert werden.

Besonders vorteilhaft ist die Verwendung des erfindungsgemäßen Verfahrens für die Darstellung eines Zeigers einer Messwertanzeige. Bei einem Zeiger müssen Änderungen insbesondere bei einer schnellen Messwertänderung auch entsprechend schnell in der Anzeige erfolgen. Um den Aufwand für eine Recheneinheit möglichst gering halten zu können, ist daher eine möglichst effiziente Zeigerdarstellung erforderlich. Insbesondere bei drehbar dargestellten Zeigern treten Linien auf, die schräg zu der in Spalten und Zeilen angeordneten Pixelrichtung verlaufen. Insbesondere derartig angeordnete Zeiger lassen sich mit dem erfindungsgemäßen Verfahren auf einfache Weise qualitativ hochwertig darstellen.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Anzeigevorrichtung,
Figur 2 ein erstes Ausführungsbeispiel für eine Objektdarstellung am Beispiel eines Zeigers,
Figuren 3 bis 5 weitere Zeigerdarstellungen,
Figur 6 eine Mittelung für die Darstellung eines Bildpunktes, der von einer Linie geschnitten wird.

### Beschreibung des Ausführungsbeispiels

Die vorliegende Erfindung kann für beliebige Anzeigevorrichtungen verwendet werden. Sie ist insbesondere vorteilhaft für Anzeigen, bei denen ein Bild in Form von einzelnen, benachbarten Bildpunkten dargestellt wird. Dies sind z.B. Flüssigkristallanzeigen, Plasmaanzeigen oder farbige Kathodenstrahlröhrenanzeigen. Das Verfahren ist insbesondere dann vorteilhaft, wenn ähnliche Objekte mit einer verhältnismäßig gleichförmigen Ausbildung, jedoch auf verschiedene Weise bewegt in einer Anzeige darzustellen sind. Daher wird das erfindungsgemäße Verfahren am Beispiel einer Anzeigeeinrichtung für Messwerte in einem Kraftfahrzeug erläutert.

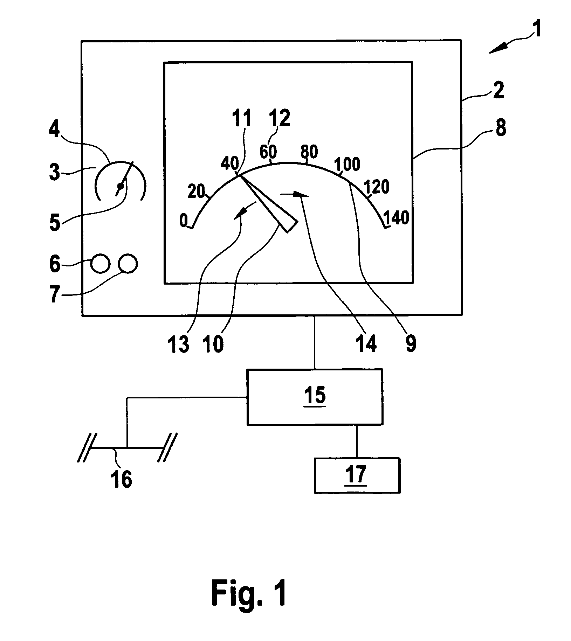

In der Figur 1 ist eine Anzeigeeinheit 1 in einem Fahrzeug gezeigt. Die Anzeigeeinheit 1 weist eine Anzeige 2 auf, die als ein sogenanntes Kombinationsinstrument vor einem Fahrer angeordnet ist. Die Anzeige 2 weist z.B. eine Zeigeranzeige 3 mit einer Skala 4 und einem mechanisch angetriebenen Zeiger 5 auf. Ferner können auch Symbolfeldanzeigen 6, 7 an der Anzeige 2 angeordnet sein. Insbesondere weist die Anzeige 2 eine Matrix-Anzeige 8 auf, die z.B. als eine Flüssigkristallanzeige ausgeführt ist. Die Matrix-Anzeige 8 kann z.B. auch als eine Laserprojektionsanzeige oder als eine Kathodenstrahlröhrenanzeige ausgeführt sein. In der Matrix-Anzeige 8 ist eine Skala 9 dargestellt. Ein ebenfalls in der Matrix-Anzeige 8 dargestellter Zeiger 10 zeigt einen Messwert auf der Skala 9 an, die mit Skalenstrichen 11 und einer Skalenbeschriflung 12 dargestellt wird. Die Darstellung des Zeigers wird nun in Abhängigkeit von dem darzustellenden Messwert so verändert, dass sich der dargestellte Zeiger 10 im Rahmen einer animierten Darstellung über der Skala 9 nach links in Pfeilrichtung 13 in Richtung eines kleineren Messwertes oder nach rechts in Pfeilrichtung 14 in Richtung eines größeren Messwertes bewegt.

Die gesamte Anzeigeeinheit 1 wird von einer Recheneinheit 15 gesteuert. Die Recheneinheit 15 ist mit einem Fahrzeugdatenbus 16 verbunden, über den Fahrzeugdaten an die Recheneinheit 15 zur Anzeige in der Anzeigeeinheit 1 übermittelt werden. Dies können z.B. die von einem Sensor erfasste aktuelle Geschwindigkeit des Fahrzeugs, ein Tankfüllstand, eine Kühlwassertemperatur oder eine Motordrehzahl sein. Die Recheneinheit 15 ist mit einem Speicher 17 verbunden. In dem Speicher 17 sind Bilddaten bzw. Anweisungen zum Erzeugen von Bilddaten abgelegt, aus denen ein in der Matrix-Anzeige 8 dargestelltes Bild von der Recheneinheit 15 bestimmt wird.

Bei der hier dargestellten Ausführungsform wird zunächst die Skala 9 mit den Skalenstrichen 11 und der Skalenbeschriflung 12 dargestellt. Diesem Bild wird der Zeiger 10 überlagert. Der Zeiger 10 wird dabei in einer dem anzuzeigenden Messwert entsprechenden Position gegenüber der Skala 9 dargestellt. Hierzu wird in erfindungsgemäßer Weise die Darstellung des Zeigers 10 bestehend aus einer Vielzahl von unmittelbar benachbarten, parallel verlaufenden Linien in der Matrix-Anzeige 8 angezeigt, wobei die benachbarten, parallel verlaufenden Linien infolge ihrer benachbarten Darstellung zusammengesetzt ein Bild des Zeigers ergeben. Aus der Darstellung der benachbarten Linien entsteht dabei bei einem Betrachter der Anzeige der Eindruck von dem Zeiger in seiner jeweiligen Position. Zur Darstellung der verschiedenen Zeigerpositionen werden Zeigerdarstellungen in Form von derartigen Pakten von Linien z.B. von der Recheneinheit 15 berechnet. In einer anderen Ausführungsform können solche Pakete bereits für bestimmte Zeigerdarstellungen, z.B. für bestimmte Geschwindigkeitswerte, vorberechnet in dem Speicher 17 abgelegt sein.

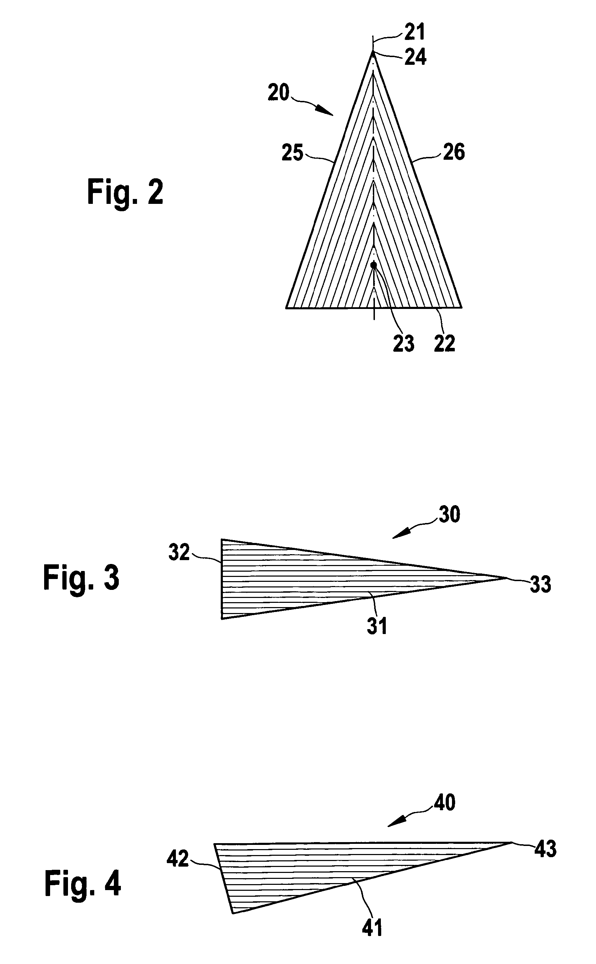

In den Figuren 2 bis 5 sind verschiedene, mögliche Zeigerdarstellungen gezeigt, die sich in erfindungsgemäßer Weise aus einzelnen Linien zusammensetzen. Die Figur 2 zeigt einen Zeiger 20, der symmetrisch zu einer Mittelachse 21 verläuft. Der Zeiger verjüngt sich ausgehend von einer Zeigerbasis 22, die bevorzugt in einem Mittelpunkt einer z.B. halbrund oder als eine halbe Ellipse ausgebildeten, in der Figur 2 nicht gezeigten Skala angeordnet ist. Die animierte Zeigerdarstellung wird dabei um einen vorzugsweise auf der Mittelachse 21 liegenden Drehpunkt 23 in der Darstellung in einer Matrix-Anzeige gedreht. Der Zeiger 20 verjüngt sich zu einer Zeigerspitze 24. Von der Zeigerbasis 22 zu der Zeigerspitze 24 verläuft jeweils eine linke Zeigerflanke 25 und eine rechte Zeigerflanke 26, die den Zeiger auf der linken und der rechten Seite begrenzen. Bei der hier dargestellten Ausführungsform setzt sich die Zeigerfläche aus unmittelbar benachbarten, parallel verlaufenden Linien zusammen, die aus Gründen der Übersichtlichkeit in der Figur 2 beabstandet dargestellt sind. Diese Linien verlaufen in der linken Zeigerhälfte ausgehend von der Zeigerbasis 22 jeweils parallel zu der linken Zeigerflanke 25 jeweils bis zu der Mittelachse 21. Entsprechend verlaufen die Linien von der Zeigerbasis 22 in der rechten Zeigerhälfte parallel zu der rechten Zeigerflanke 26 zu der Zeigerspitze 24. Ein Startpunkt und ein Endpunkt einer jeweiligen Linie sind bevorzugt in Bezug auf ein Koordinatensystem abgelegt. Als Ursprung dieses Koordinatensystems kann z.B. der Zeiger-Drehpunkt 23 definiert sein. Durch die Speicherung des Startpunktes und des Endpunktes ist auch eine Richtung der Linie sowie eine Länge der Linie vorgegeben. In einer anderen Ausführungsform können auch ein Startpunkt, eine Länge und eine Richtung der Linie vorgegeben sein. Auch durch diese Beschreibung ist der Verlauf der Linie eindeutig bestimmt. Ferner kann auch eine Breite der Linie abgelegt sein. In einer weiteren Ausführungsform können aber auch alle Linien eine definierte, gleiche Breite aufweisen. In einer weiteren Ausführungsform kann auch eine Verkettung der einzelnen Linien in der Weise erfolgen, dass ein Startpunkt immer relativ zum letzten Endpunkt einer Linie angegeben wird. Der Zielpunkt der Linie wird nun in Bezug auf den Startpunkt angegeben und so fort. Damit kann eine Objektdarstellung ausgehend von einem ersten, zunächst vorgegebenen Startpunkt an einer beliebigen Stelle in einer Anzeige positioniert werden.

In einem Vergleichsbeispiel können alle Linien eine gleiche, vorgegebene Farbe aufweisen. In einer ersten Ausführungsform können jedoch für jede Linie ein Farbverlauf und/oder ein Farbsättigungsverlauf von dem Startpunkt zu dem Zielpunkt vorgegeben sein. In einer Ausführungsform können hierbei ein Farbwert in dem Farbdreieck für den Startpunkt und ein Farbwert für den Endpunkt vorgegeben sein. Die Farbänderung entlang der Linie entspricht dann linear dem Verlauf des Abstandes der beiden Farbpunkte im Farbdreieck. Entsprechend dem Abstand eines Bildpunktes auf der Linie zu dem Startpunkt und zu dem Zielpunkt wird ein Farbwert zugewiesen, der einen entsprechenden Abstand zu dem Startwert und dem Zielwert der Verbindungslinie im Farbdreieck hat. Auf gleiche Weise können ein Farbsättigungsanfangswert und ein Farbsättigungsendwert vorgegeben sein. Die Farbsättigung ändert sich dann von dem Startpunkt zu dem Endpunkt in gleicher Weise bevorzugt linear.

Bei dem in der Figur 2 gezeigten Ausführungsbeispiel sind die Linien von der Basis des Zeigers zu der Zeigerspitze bzw. zu der Mittelachse 21 jeweils durchgehend eingetragen. Jedoch kann eine einzelne Linie auch in mehrere Teillinien zerlegt sein. Hierbei können Linien derart verkettet sein, dass eine nächste Linie an einem Endpunkt der vorhergehenden Linie beginnt. Eine unstetige, gegenläufige oder zumindest unregelmäßige Änderung einer Farbe kann so z.B. dadurch erreicht werden, dass in Bereichen mit einer entsprechenden Farbänderung die Linien in entsprechende Teillinien zerlegt werden, denen jeweils lineare Farbänderungen zugewiesen werden, während ein komplexer Farbverlauf durch die Aneinanderreihung der Teillinien zu der Gesamtlinie realisiert wird.

Ein weiteres Ausführungsbeispiel für eine Zeigerdarstellung ist in der Figur 3 gezeigt, bei der alle Linien 31 in einem Zeiger 30 parallel verlaufen. Bei dem in der Figur 3 gezeigten Ausführungsbeispiel verlaufen diese Linien ausgehend von einer Zeigerbasis 32 rechtwinklig zu der Zeigerbasis 32 bis zu einer Zeigerspitze 33 und damit parallel zu der Hauptausrichtung des Zeigers. In einer ersten Ausführungsform können in verschiedene Richtungen weisende Zeiger so dargestellt werden, dass sie aus Linien zusammengesetzt werden, die entsprechend der Hauptausrichtung des Zeigers ausgerichtet sind. Mit einer Änderung der Zeigerausrichtung ändert sich dann auch die Ausrichtung der Linien. In einer weiteren Ausführungsform ist es aber auch möglich, die Ausrichtung innerhalb der Matrix-Anzeige 8 auf wenige Vorzugsrichtungen zu beschränken. So können z.B. nur Ausrichtungen in einem Abstand von 22,5° zueinander vorgesehen sein. Eine mögliche Darstellung eines Zeigers in einem derartigen Fall ist in der Figur 4 dargestellt. Der Zeiger in der Figur 4 ist gegenüber der Ausrichtung in der Figur 3 leicht entsprechend einer Pfeilrichtung 13 gemäß der Figur 1 gedreht. Die Ausrichtung der Linien 41 entspricht dabei jedoch der Ausrichtung der Linien 31 in der Figur 3. Allerdings verlaufen die Linien 41 in dem Zeiger 40 nicht mehr in der Hauptrichtung des Zeigers von der Zeigerbasis 42 zu der Zeigerspitze 43.

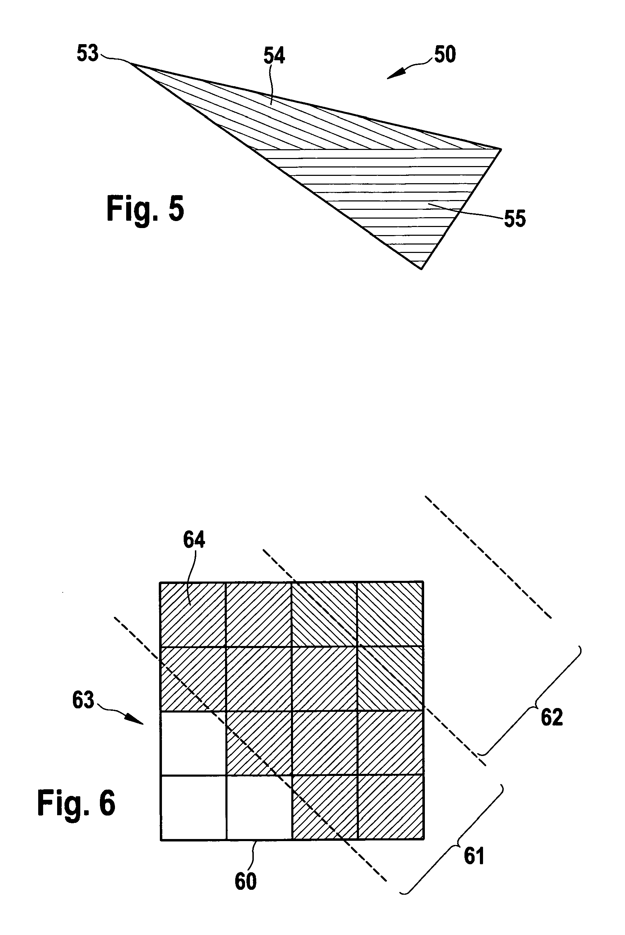

In der Figur 5 ist ein weiteres Ausführungsbeispiel gezeigt, bei dem innerhalb eines Zeigers 50 die Linien, aus denen der Zeiger gebildet wird, in einem ersten Bereich 54 in Richtung der Zeigerspitze 53 ausgerichtet sind, während in einem zweiten Bereich 55 die Linien eine andere Ausrichtung haben.

In der Figur 6 ist eine Ausführungsform fiir eine optimale Anzeige einer Linie in der Matrix-Anzeige 8 gezeigt. In der Figur 6 ist hierzu ein einzelner Bildpunkt 60 der Anzeige dargestellt. Bei der Übertragung der Liniendaten aus dem Speicher 17 hat die Recheneinheit 15 eine erste Linie 61 und eine zweite Linie 62 ermittelt, die den Bildpunkt 60 zumindest teilweise schneiden. Ein weiterer Bereich 63 des Bildpunkts 60 bleibt frei. Zur Ermittelung des Ansteuerungswertes für den Bildpunkt 60 wird der Bildpunkt rechnerisch in eine Vielzahl von Teilbildpunkten zerlegt. Der Ansteuerungswert kann z.B. bei einer Kathodenstrahlanzeige oder einer LCD der Helligkeitswert für die RGB Teilbildpunkte des Bildpunktes 60 sein.

In dem hier gezeigten Ausführungsbeispiel werden für die Berechnung 16 Teilbildpunkte in jeweils vier Zeilen und Spalten herangezogen. Beispielhaft ist nur ein Teilbildpunkt 64 mit einem Bezugszeichen versehen. Bevorzugt erfolgt eine Zerlegung des Bildpunktes 60 derart, dass 32 Zeilen und 32 Spalten betrachtet werden. Bei dem hier gezeigten Ausführungsbeispiel sind zwei Linien 61, 62 an einem Rand eines Zeigers gezeigt. Hierbei soll z.B. die erste Linie 61 hellblau und die zweite Linie 62 dunkelblau sein, um einen sanften Übergang an dem Rand des Zeigers zu ermöglichen. Nun wird den Teilbildpunkten jeweils diejenige Farbe zugewiesen, die den jeweiligen Teilbildpunkt überwiegend ausfüllt. Für die nicht überdeckten Teilbildpunkte wird ein Hintergrundfarbwert berücksichtigt, z.B. schwarz. In einer weiteren Ausführungsform kann eine Gauss-Filterung mit jeweils benachbarten Teilbildpunkten durchgeführt werden. Nun wird über alle Teilbildpunkte aufsummiert und gemittelt. Der endgültige Farbwert des Bildpunktes 60 ergibt sich aus dieser Mittelung. In einer weiteren Ausführungsform kann auch hier noch eine Gaus-Filterung mit jeweils benachbarten Bildpunkten durchgeführt werden. Dabei werden die Farbwerte jedes Bildpunktes aus dem entsprechenden Wert des Bildpunktes selber und der ihn umgebenden acht Punkte mittels einer gewichteten Addition ermittelt. Z.B. kann hierbei für den Bildpunkt selbst ein Faktor 4, für die oben und seitlich liegenden Punkte ein Faktor 2 und ein Faktor 1 für die diagonal liegenden Punkte berücksichtigt werden. In einer weiteren Ausführungsform kann auch bei der Berechnung des einzelnen Bildpunktes selbst die berücksichtigten Teilbildpunkte um Teilbildpunkte benachbarter Bildpunkte erweitert werden.

Neben der Berücksichtigung des Farbbildpunktes bei einer Darstellung kann auch für die einzelnen Linien ein sogenannter Alpha-Wert vorgegeben werden, der eine Transparenz gegenüber einer der Objektdarstellung zugrunde liegenden, anderen Darstellung angibt. Ist der Alpha-Wert 1, so überdeckt die vorzunehmende Objektdarstellung alle darunter liegenden, anderen Darstellungen. Ist der Alpha-Wert z.B. 0,5, so erfolgt eine Mischung zwischen dem darunter liegenden Bild und dem darüber liegenden, anderen Objekt.

In einer ersten Ausführungsform wird für diejenigen Teilbildpunkte, in denen keine Linie liegt, also für die drei Teilbildpunkte in der linken unteren Ecke des Bildpunktes 60, ein Alpha-Wert von 0 angenommen werden. Dies bedeutet, dass in diesen Bereichen keine Überdeckung durch die Linien des Zeigers erfolgen soll. Um einen glatten Übergang zwischen dem Zeiger und dem Hintergrund zu ermöglichen werden dabei für die drei Teilbildpunkte diejenigen Farbwerte angenommen, die dem Hintergrundbild entsprechen, also z.B. gemäß der Figur 1 dem Hintergrund der Skala. Diese Werte werden für die Mittelung zur Ermittelung des Wertes des Bildpunktes 60 berücksichtigt. Wird z.B. ein Alpha-Wert von 0,75 für den Zeiger angenommen, so geht der Farbwert des Hintergrundbildes jeweils zu einem Viertel in die Berechnung des Ansteuerungswertes für den Bildpunkt ein. Damit kann ein Hintergrundbild, z.B. ein Skalenwert oder ein dargestelltes Wamsymbol, teilweise auch dann erkennbar bleiben, wenn eine Abdeckung durch den Zeiger vorliegt.

In einer weiteren Ausführungsform kann der für die Speicherung der Darstellung benötigte Speicherplatz dadurch verringert werden, dass die Liniendaten codiert abgelegt werden. Zunächst werden die Liniendaten zur Darstellung des jeweiligen Objektes erzeugt einschließlich der entsprechenden Anwendungsvorschrift, um aus den jeweiligen Liniendaten wieder ein Bild zusammensetzen zu können. Hierbei werden die generierten Liniendaten bevorzugt in zwei Typen von Zeichenanweisungen zerlegt: Einerseits sind dies Positionieranweisungen relativ zu einer aktuellen Position, andererseits sind dies Zeichenbefehle für eine Linie mit Angabe der Länge, des Startfarbwertes bzw. des Transparenzwertes und einer Differenz zu diesem Startwert am Endpunkt der Linie. Dabei werden in der Befehlsfolge zur Zeichnung eines Bildes mehrere dieser Anweisungen wahrscheinlich auch mehrfach auftreten. Um den benötigten Speicherplatz zu verringern, wird nun die Häufigkeit der Anweisungen über alle gespeicherten Bilder ermittelt. Besonders häufig auftretenden Befehlen wird nunmehr ein 1-Byte-Befehlscode zugeordnet, während der jeweilige Befehl in einer zugehörigen Tabelle abgelegt wird. Weniger häufigen Befehlen wird ein 2-Byte-Code zugewiesen, während noch selteneren Befehlen jeweils ein 3- bzw. ein 4-Byte-Code zugewiesen wird. Nun werden die Zeichenanweisungen jeweils für alle Bilder in dem Speicher 17 abgelegt. Ein Bild kann nun derart gespeichert werden, dass für die erzeugenden Linien jeweilige Befehlscodes abgelegt werden, so dass die Erzeugung der Liniendarstellungen in den Befehlscodes komprimiert beschrieben ist und mittels der gespeicherten Tabelle aus den komprimierten Befehlscodes wieder gewonnen werden kann.

## Patentansprüche

1. Verfahren zur Darstellung eines Objekts in einer Anzeige, wobei zu dem Objekt Linien mit einer Längeninformation, mit einer Startpunktinformation und mit einer Richtungsinformation gespeichert werden, **dadurch gekennzeichnet, dass** die Darstellung des Objekts durch eine Darstellung der gespeicherten Linien derart erzeugt wird, dass zur Objektdarstellung eine Vielzahl unmittelbar benachbarter, parallel verlaufender Linien angezeigt werden und dass mit jeder Linie ein Farbverlauf und/oder ein Farbsättigungsverlauf von einem jeweiligen Anfangsfarbwert zu einem Endfarbwert gespeichert werden und dass die Linie von einem Startpunkt zu einem Endpunkt ihre Farbe und/oder ihre Farbsättigung entsprechend dem Farbverlauf bzw. dem Farbsättigungsverlauf ändert.

2. Verfahren nach einem der vorherigen Ansprüche, **dadurch gekennzeichnet, dass** die Linien mit Startpunkten und Endpunkten gespeichert werden.

3. Verfahren nach einem der vorherigen Ansprüche, **dadurch gekennzeichnet, dass** die Informationen zu den Linien kodiert gespeichert werden.

4. Verfahren nach einem der vorherigen Ansprüche, **dadurch gekennzeichnet, dass** bei einer Übertragung der Linien auf eine Bildpunktstruktur einer Anzeige eine Mittelung der Bildinformationen für einzelne Bildpunkte erfolgt.

5. Verfahren nach einem der vorherigen Ansprüche, **dadurch gekennzeichnet, dass** ein Bereich der Anzeigefläche, in dem keine Objektdarstellung erfolgt, transparent geschaltet wird.

6. Verfahren nach einem der vorherigen Ansprüche, **dadurch gekennzeichnet, dass** das darzustellende Objekt ein Zeiger einer Messwertanzeige ist.

7. Anzeigevorrichtung mit einer Bildpunkte aufweisenden Anzeige (8), mit einer Steuervorrichtung (15) der Anzeige (8) und mit einem Speicher (17), wobei zur Darstellung eines Objekts in der Anzeige zu dan Objekt Linien mit einer Längeninformation, mit einer Startpunktinformation und mit einer Richtungsinformation in dem Speicher (17) nichtflüchtig gespeichert sind, **dadurch gekennzeichnet, dass** die Steuervorrichtung (15) eine Bilddarstellung derart erzeugt, dass die dem Objekt zugeordneten Linien aus dem Speicher abgerfan und als eine Vielzahl unmittelbar benachbarter und parallel verlaufender Linien angezeigt werden, wobei mit jeder Linie ein Farbverlauf und/oder ein Farbsättigungsverlauf von einem jeweiligen Anfangsfarbwert zu einem Endfarbwert gespeichert werden und wobei die Linie von einem Startpunkt zu einem Endpunkt ihre Farbe und/oder ihre Farbsättigung entsprechend dem Farbverlauf bzw. dem Farbsättigungsverlauf ändert.

## Claims

1. Method for representing an object in a display, wherein, relating to the object, lines are stored with length information, with starting point information and with direction information, **characterized in that** the representation of the object is brought about by a representation of the stored lines such that, for the purpose of representing the object, a multiplicity of directly neighbouring, parallel lines are shown and a colour profile and/or a colour saturation profile from a respective starting colour value to an end colour value are stored with each line and the line changes its colour and/or its colour saturation in accordance with the colour profile or the colour saturation profile from a starting point to an end point.

2. Method according to the preceding claim, **characterized in that** the lines are stored with starting points and end points.

3. Method according to one of the preceding claims, **characterized in that** the information for the lines is stored in an encoded manner.

4. Method according to one of the preceding claims, **characterized in that**, when transferring the lines to a pixel structure of a display, the image information for individual pixels is averaged.

5. Method according to one of the preceding claims, **characterized in that** a region of the display area, in which no object representation takes place, is switched to a transparent state.

6. Method according to one of the preceding claims, **characterized in that** the object to be represented is a pointer of a measurement value display.

7. Display apparatus having a display (8) with pixels, having a control apparatus (15) of the display (8) and having a memory (17), wherein, relating to the object, lines are stored in the memory (17) in a non-volatile manner with length information, with starting point information and with direction information, for representing an object in the display, **characterized in that** the control apparatus (15) produces an image representation such that the lines which are associated with the object are retrieved from the memory and are shown as a multiplicity of directly neighbouring and parallel lines, wherein a colour profile and/or a colour saturation profile from a respective starting colour value to an end colour value are stored with each line and wherein the line changes its colour and/or its colour saturation in accordance with the colour profile or the colour saturation profile from a starting point to an end point.

## Revendications

1. Procédé pour représenter un objet dans un affichage, des lignes dotées d'une information de longueur, dotées d'une information de point de départ et d'une information de direction étant enregistrées à propos de l'objet, **caractérisé en ce que** la représentation de l'objet est générée par une représentation des lignes enregistrées de telle sorte qu'une pluralité de lignes directement voisines s'étendant en parallèle sont affichées pour la représentation de l'objet et **en ce qu'**avec chaque ligne est enregistré un dégradé de couleur et/ou un dégradé de saturation de couleur d'une valeur chromatique initiale respective à une valeur chromatique finale et **en ce que** la ligne change sa couleur et/ou sa saturation de couleur en fonction du dégradé de couleur ou du dégradé de saturation de couleur entre un point de départ et un point final.

2. Procédé selon la revendication précédente, **caractérisé en ce que** les lignes sont enregistrées avec des points de départ et des points finaux.

3. Procédé selon l'une des revendications précédentes, **caractérisé en ce que** les informations sur les lignes sont enregistrées codées.

4. Procédé selon l'une des revendications précédentes, **caractérisé en ce que** lors du transfert des lignes sur une structure à pixels d'un affichage, un calcul de la moyenne des informations d'image est effectué pour les pixels individuels.

5. Procédé selon l'une des revendications précédentes, **caractérisé en ce qu'**une zone de la surface d'affichage dans laquelle aucune représentation d'objet n'a lieu est commandée pour qu'elle soit transparente.

6. Procédé selon l'une des revendications précédentes, **caractérisé en ce que** l'objet à représenter est une aiguille d'un indicateur de valeur mesurée.

7. Dispositif d'affichage comprenant un affichage (8) présentant des pixels, comprenant un dispositif de commande (15) de l'affichage (8) et comprenant une mémoire (17), des lignes dotées d'une information de longueur, dotées d'une information de point de départ et d'une information de direction étant enregistrées à propos d'un objet de manière non volatile dans la mémoire (17) en vue de la représentation de l'objet dans l'affichage, **caractérisé en ce que** le dispositif de commande (15) génère une représentation d'image de telle sorte que les lignes associées à l'objet peuvent être chargées à partir de la mémoire et peuvent être affichées sous la forme d'une pluralité de lignes directement voisines et s'étendant en parallèle, un dégradé de couleur et/ou un dégradé de saturation de couleur d'une valeur chromatique initiale respective à une valeur chromatique finale étant enregistrés avec chaque ligne et la ligne changeant sa couleur et/ou sa saturation de couleur en fonction du dégradé de couleur ou du dégradé de saturation de couleur entre un point de départ et un point final.
